# EUROPÄISCHE PATENTANMELDUNG

(11) **EP 1 623 877 A1**
(43) Veröffentlichungstag der Anmeldung: **08.02.2006**
(21) Anmeldenummer: 04291970.4
(22) Anmeldetag: 02.08.2004
(51) Int. Cl.: B60R 13/02

(54) **Befestigungselement zum Befestigen einer Baugruppe an der Karosserie eines Kraftfahrzeugs**

(71) Anmelder: Lisi Automotive Rapid, 95650 Puiseux Pontoise (FR)
(72) Erfinder: Demel, Otto, 69123 Heidelberg (DE); Gabrüsch, Simon, 38104 Braunschweig (DE)
(74) Vertreter: Thinat, Michel

(57) **Zusammenfassung**

Die Erfindung betrifft ein Befestigungselement zum Befestigen einer Baugruppe an der Karosserie eines Kraftfahrzeugs, wobei das Befestigungselement (A) eine in der Karosserie zu verankernde Metallklammer (1) zum Aufnehmen eines entsprechend geformten Teils der Baugruppe und ein auf die Metallklammer (1) aufsteckbares und einen die Baugruppe (B) aufnehmenden Teil der Metallklammer (1) wenigstens teilweise auskleidendes Plastikteil (2) aufweist.

## Beschreibung

Die Erfindung betrifft ein Befestigungselement zum Befestigen einer Baugruppe an der Karosserie eines Kraftfahrzeugs, sowie eine Anordnung von Befestigungselementen zu diesem Zweck.

Bei der Endmontage von Kraftfahrzeugen erfolgt der Einbau von Baugruppen und Montageeinheiten, wie z.B. Instrumententafeln, im Rahmen der Endmontage immer mehr durch Automaten. Dabei sind die betroffenen Baugruppen zum einen jeweils so konzipiert, daß für einen Einbau durch Automaten erforderliche spezifische Montageelemente verwendet werden können, und daß zum anderen nicht nur die materielle Qualität der Produktion erhalten bleibt, sondern daß auch speziellen, zum Beispiel betriebsbedingten Kriterien Rechnung getragen wird.

So ist z.B. bei der Ausrüstung von Kraftfahrzeugen mit verschiedenen Meßinstrumenten und Anzeigen die Entwicklung im Laufe der Jahre dahingegangen, daß alle Instrumente und Anzeigen in einer als gesonderte Einheit gefertigten Instrumententafel zusammengefaßt und dann als solche Montageeinheit in das Kraftfahrzeug eingesetzt werden. In letzterer Zeit ist die Entwicklung noch weitergegangen, indem man die Instrumententafel und die Verkleidung des Fahrgastraumes direkt unterhalb der Windschutzscheibe, also mit der Instrumententafel auf der Fahrerseite und mit einem Ablagefach und/oder einem Airbag auf der Beifahrerseite zu einer gesamten Baugruppe zusammengefaßt hat. Diese gesamte Baugruppe wird dann zum vorgesehenen Zeitpunkt bei der Montage des Kraftfahrzeugs eingesetzt und befestigt.

Bei der Montage einer solchen großen Baugruppe ist jedoch zu beachten, daß sich ein Kraftfahrzeug im Betrieb verwindet. Daraus resultiert die Forderung, die Baugruppe einerseits so fest zu montieren, daß sie unter allen Betriebsumständen fest montiert bleibt und daß insbesondere die verschiedenen Instrumente und Anzeigen störungsfrei funktionieren, daß aber andererseits eine begrenzte, aber hinreichende Bewegungsfreiheit der Baugruppe gegenüber der Karosserie des Kraftfahrzeugs gewährleistet ist, um die Auswirkungen der Verwindung auf die Baugruppe so gering wie möglich zu halten. Zu den Auswirkungen gehören einerseits mechanische Schwingungen, die die Betriebsfähigkeit der Meßinstrumente und Anzeigen beeinträchtigen könnten. Dazu gehören andererseits aber auch akustische Effekte wie z.B. Quietschgeräusche, die aus dem Aneinanderreiben von Teilen der Baugruppe und der Karosserie herrühren.

Um derartige Störgeräusche zu unterbinden, wird eine Baugruppe, wie z.B. eine Instrumententafel oder ein Armaturenbrett, an der Karosserie eines Kraftfahrzeugs durch Metallklammern befestigt, die einerseits in der Karosserie verankert sind und andererseits so ausgebildet sind, daß sie die Baugruppe und insbesondere ein entsprechend geformtes Teil dieser Baugruppe verankernd aufnehmen können. Die Baugruppe ist dann zusätzlich noch mit einer oder mit zwei Schrauben an der Karosserie befestigt.

Des weiteren werden nach diesem Montageprinzip Klammern verwendet, die ganz oder teilweise mit Plastik beschichtet sind. Einen Plastiküberzug fest auf die Klammer aufzubringen läßt sich jedoch nur mit einer beschränkten Auswahl an Plastikmaterialien bewerkstelligen. Und diese Plastikmaterialien ergeben oft Überzüge, die nicht immer zufriedenstellende Ergebnisse bei der Unterdrückung von Quietschgeräuschen liefern. Außerdem ist die Herstellung solcher Klammern zum Beispiel wegen hoher Werkzeugkosten relativ teuer.

Es ist daher Aufgabe der Erfindung, ein Befestigungselement vorzuschlagen, das kostengünstiger als bisher hergestellt werden kann und das zudem eine beim Betrieb des Kraftfahrzeugs keine Geräusche oder zumindest weniger Geräusche als bisher verursachende Befestigung einer Baugruppe an der Karosserie eines Kraftfahrzeugs ermöglicht.

Das der Erfindung zugrundeliegende Problem ist mit einem Befestigungselement nach Anspruch 1 und einer Anordnung von Befestigungselementen nach Anspruch 8 gelöst.

Zusätzliche Merkmale des Gegenstands der Erfindung sind in den jeweiligen Unteransprüchen definiert.

Weitere Merkmale und Vorteile der Erfindung ergeben sich aus der nachstehenden Beschreibung eines Ausführungsbeispiels anhand der Zeichnungen.

Dabei zeigen die Zeichnungen folgendes:
Figur 1 zeigt ein erfindungsgemäßes Befestigungselement in einer Schrägansicht von oben,
Figur 2 zeigt ein erfindungsgemäßes Befestigungselement in einer Schrägansicht von unten,
Figur 3 zeigt die Metallklammer eines erfindungsgemäßen Befestigungselements in einer Schrägansicht von oben,
Figur 4 zeigt die Metallklammer der Figur 3 in einer Schrägansicht von vorne,
Figur 5 zeigt das Plastikteil eines erfindungsgemäßen Befestigungselements in einer Schrägansicht von vorne,
Figur 6 zeigt die Unterseite des Plastikteils aus Figur 5 in einer Perspektive von unten,
Figur 7 zeigt ein erfindungsgemäßes Befestigungselement in einer Einbauposition.

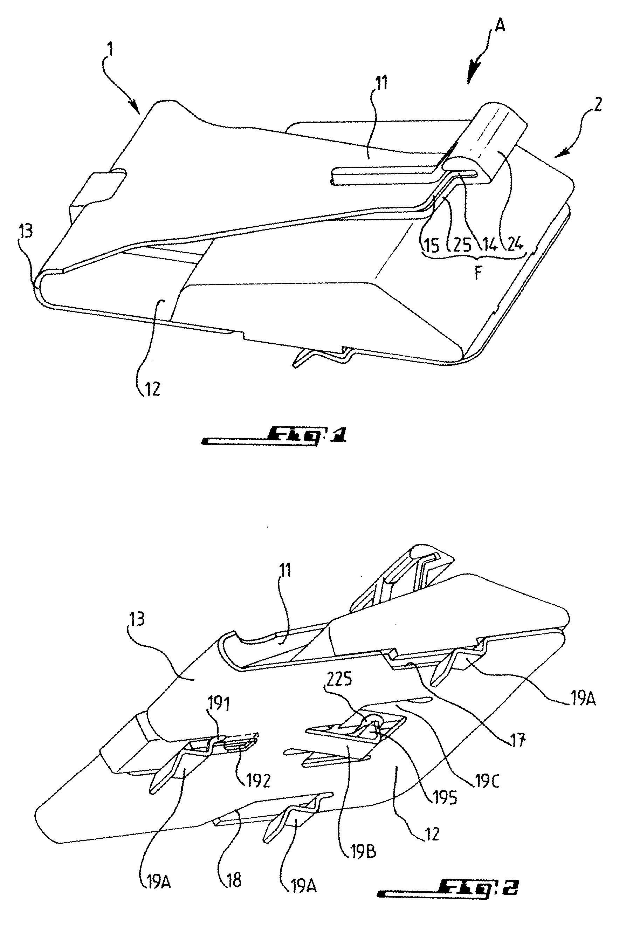

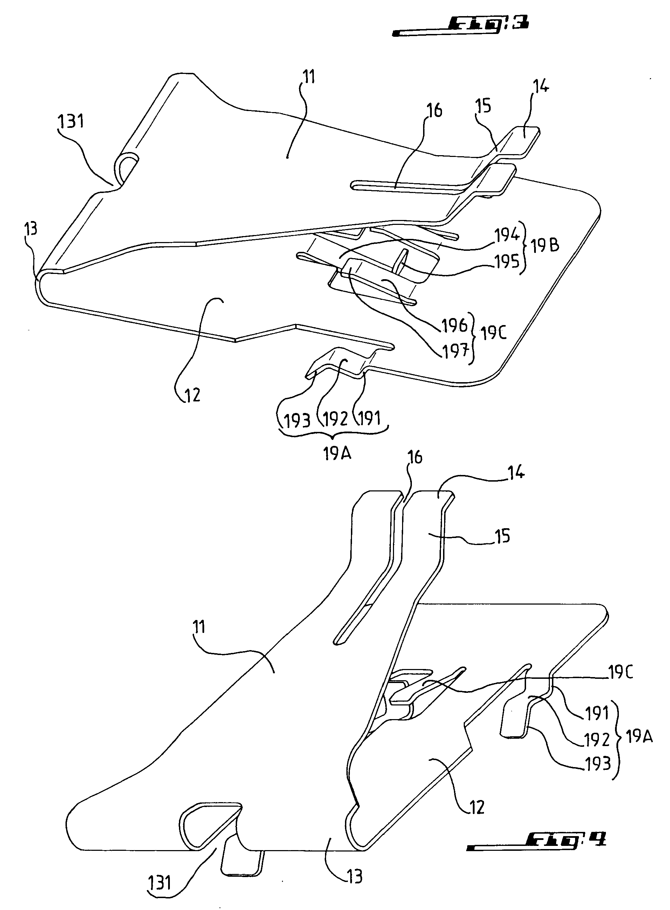

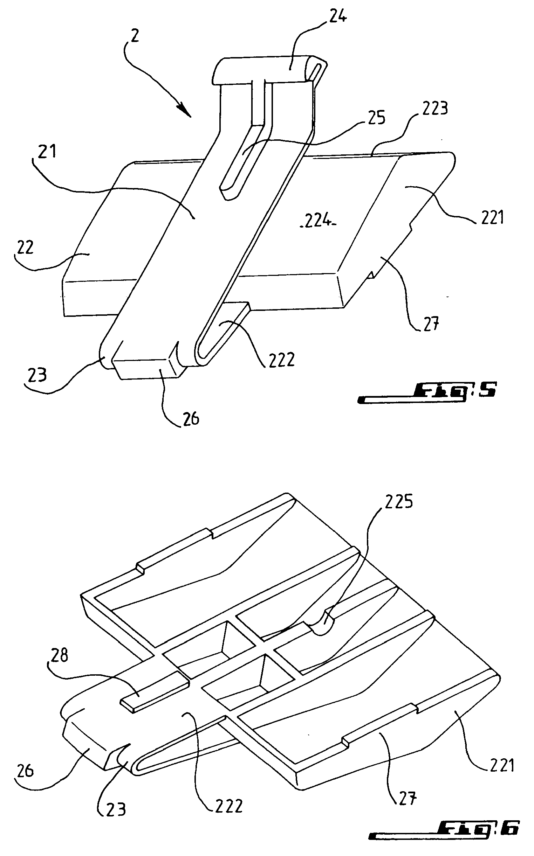

Das in den Figuren 1 und 2 gezeigte erfindungsgemäße Befestigungselement zum Befestigen einer Baugruppe, z.B. eines Armaturenbretts bzw. einer Instrumententafel, an der Karosserie eines Kraftfahrzeugs weist eine in der Karosserie zu verankernde Metallklammer auf, die so ausgebildet ist, daß sie ein entsprechend geformtes Teil der Baugruppe verankernd aufnehmen kann. Die Metallklammer ist zu diesem Zweck im wesentlichen V-förmig ausgebildet. Das erfindungsgemäße Befestigungselement weist ferner ein auf die Metallklammer aufsteckbares Plastikteil auf, das ein die Baugruppe aufnehmendes Teil der Metallklammer wenigstens teilweise auskleidet. Für die Verwendung des Befestigungselements in der Kraftfahrzeugindustrie ist vorgesehen, daß das Befestigungselement vollständig angeliefert wird, das heißt, daß das Plastikteil bereits auf die Metallklammer aufgesteckt ist und das Befestigungselement als solches im zu fertigenden oder zu reparierenden Kraftfahrzeug in der Karosserie verankert wird.

Das Plastikteil ist so ausgebildet, daß wenigstens ein Eingangsbereich des Befestigungselements, an den die Baugruppe mit einem dafür vorgesehenen Teil angesetzt und in den das Teil dann eingeschoben wird, bedeckt ist. Ferner ist das Plastikteil vorzugsweise aus einem Kunststoff mit sehr günstigem Gleitverhalten hergestellt, zum Beispiel aus einem Acetalcopolymerisat, dem unterschiedliche Additive, zum Beispiel Silikonöl oder Teflon, beigemischt sein könnnen. Derartige Kunststoffe weisen dynamische Reibungszahlen im Bereich von etwa 0,05 bis etwa 0,15 auf (bei einer Rauhtiefe von etwa 2 µm und einer Gleitgeschwindigkeit von etwa 5 mm/min) und eignen sich gut für die erfindungsgemäße Anwendung, da hier nur kurze Gleitwege und geringe Gleitgeschwindigkeiten, aber hohe Flächenpressungen zwischen dem Befestigungselement und der zu befestigenden Baugruppe vorliegen.

Die Herstellung des Befestigungselements in Form von zwei getrennten Teilen ermöglicht neben einer größeren Auswahl an Kunststoffen auch eine größere Gestaltungsfreiheit bei der Formgebung der Kunststoffauflage bei gleichzeitig niedrigeren Kosten für die Herstellung der entsprechenden Werkzeuge.

Die Metallklammer 1 und das Plastikteil 2 sind so geformt, daß sie jeweils einen als Federarm wirkenden Abschnitt aufweisen, wobei der Federarm 11 der Metallklammer 1 und der Federarm 21 des Plastikteils 2 gemeinsam einen Federarm des Befestigungselements A mit einem zum Eingreifen in eine dafür vorgesehene Aufnahmeöffnung BO der Baugruppe B bestimmten freien Ende F bilden.

Die Metallklammer 1 ist mit hoher Vorspannung gefertigt und weist eine zur Aufnahme der zu befestigenden Baugruppe bestimmte Montageöffnung vorgegebener Weite auf. Durch das Einsetzen des Plastikteils 2 wird die Metallklammer 1 geweitet. Dabei sind aber die Metallklammer 1 und das Plastikteil 2 so bemessen und aufeinander abgestimmt, daß die Montageöffnung der mit dem Plastikteil versehenen Metallklammer genauso groß ist wie jene der Metallklammer ohne Plastikteil.

Die Metallklammer 1 und das Plastikteil 2 sind jeweils mit Formelementen versehen, die derart miteinander zusammenwirken, daß das Plastikteil 2 wenigstens dann mit der Metallklammer 1 gegeneinander unverschiebbar verbunden ist, wenn eine Baugruppe B in das Befestigungselement A eingeschoben ist. Vorteilhafterweise sind die Formelemente der Metallklammer und des Plastikteils so ausgebildet, daß das Plastikteil 2 auch dann mit der Metallklammer 1 unverschiebbar verbunden ist, wenn das Befestigungselement noch nicht in der Karosserie verankert ist. Die Formelemente der Metallklammer 1 und des Plastikteils 2 sind in den nachstehenden Beschreibungen der Metallklammer 1 und des Plastikteils 2 aufgeführt.

Das freie Ende F des Federarms 11, 21 des Befestigungselements A ist so angeschrägt, daß es aus der Aufnahmeöffnung BO der Baugruppe B austritt, wenn die Baugruppe B unter Einwirkung einer vorbestimmten Kraft aus dem Befestigungselement A herausgezogen wird, und daß das freie Ende F des Federarms des Befestigungselements A die Baugruppe B auf diese Weise freigibt, daß aber das Befestigungselement A dabei in der Karosserie C verankert bleibt.

Die Metallklammer 1 ist vorzugsweise aus einem Federstahl hergestellt und hat eine, von der Seite gesehen, im wesentlichen V-förmige Struktur mit zwei Schenkeln 11, 12 und einem die beiden Schenkel an deren einem Ende federnd verbindenden Abschnitt 13. Wie aus Figur 7, in der das Befestigungselement A in seiner Gebrauchslage bzw. Einbauposition dargestellt ist, ersichtlich ist, bezeichnet das Bezugszeichen 11 denjenigen der beiden Schenkel des Befestigungselements A, mit Hilfe dessen die Baugruppe im Befestigungselement verankert wird. Das Bezugzeichen 12 bezeichnet dagegen denjenigen Schenkel des Befestigungselementes A, der mittels weiter unten beschriebener Zungen in entsprechend angeordneten und geformten Öffnungen der Karosserie C verankert wird.

Der Schenkel 11 der Metallklammer 1 ist im wesentlichen trapezförmig ausgebildet, wobei die breitere Basis des Trapezes dem Verbindungsabschnitt 13 zugewandt ist und die schmalere Basis des Trapezes das freie Ende der Metallklammer 1 bildet. Das freie Ende der Metallklammer 1 ist vorteilhafterweise derart abgewinkelt, daß es einen zum Schenkel 11 in etwa parallel verlaufenden, seitlich versetzten Abschnitt 14 und einen den Abschnitt 14 mit dem übrigen Teil des Schenkels 11 verbindenden schräg verlaufenden Abschnitt 15 aufweist. Ferner weist der Schenkel 11 eine vom freien Ende des Schenkels 11 ausgehende, mittig verlaufende und über die Abschnitte 14, 15 hinaus gehende Einkerbung 16 auf. Die Länge der Einkerbung 16 beträgt vorteilhafterweise etwa ein Drittel der Länge des Schenkels 11. Die Einkerbung 16 ist ein erstes der Formelemente der Metallklammer 11, die mit einem entsprechenden Formelement des Plastikteils 2 zusammenwirken, um das Plastikteil 2 mit der Metallklammer 1 gegeneinander unverschiebbar zu verbinden.

Der in etwa rechteckige Schenkel 12 der Metallklammer 1 ist in etwa genauso lang wie der Schenkel 11, vorzugsweise jedoch etwas länger als der Schenkel 11. Der Schenkel 12 weist an seinen beiden Längsseiten Ausschnitte 17, 18 auf, die zu den Formelementen der Metallklammer 1 gehören und deren Abmessungen denjenigen der entsprechenden Formteile des Plastikteils 2 entsprechen. Der Schenkel 12 weist ferner mehrere Zungen auf, die durch Ausstanzen und Abwinkeln aus dem Schenkel 12 erhalten worden sind und mittels derer das Befestigungselement A in der Karosserie C verankert wird.

Beim abgebildeten Ausführungsbeispiel weist der Schenkel 12 insgesamt vier Zungen auf, und zwar drei Zungen 19A, die durch Ausstanzen und zweimaliges Abwinkeln in etwa Z-förmig ausgebildet sind und die sich in Richtung auf den Verbindungsabschnitt 13 zu erstrecken, sowie eine Zunge 19B, die durch Ausstanzen und einmaliges Abwinkeln L-förmig ausgebildet ist und die sich zum freien Ende des Schenkels 12 hin erstreckt. Die Zungen 19A weisen jeweils drei Abschnitte auf, und zwar einen ersten mit dem Schenkel 12 verbundenen Abschnitt 191, einen zwischen den beiden Abwinkelungen liegenden mittleren Abchnitt 192 und einen ein freies Ende der Zunge 19A darstellenden Endabschnitt 193. Dabei sind die Abwinkelungen so angelegt, daß die erste Abwinkelung in einem Abstand vom Ende der Ausstanzung, d.h. in einem Abstand vom Übergang des Schenkels 12 in die Zunge 19A erfolgt, um einen Abschnitt 191 zu erhalten, der das Federelement der Zunge 19A darstellt. Die erste Abwinklung wird so ausgeführt, daß die Zunge mit ihrem mittleren Abschnitt 192 wenigstens teilweise in den zwischen den beiden Schenkeln 11, 12 liegenden Raum hineinreicht. Die zweite Abwinklung erfolgt dann so, daß der Endabschnitt 193 zum Abschnitt 191 annähernd parallel verläuft. Je nach Anfangsbiegung, die die Zunge 19A aufweist, solange das Plastikteil 2 nicht in die Metallklammer 1 eingesetzt ist, reicht der Endabschnitt 193 der Zunge 19A anfangs ganz oder teilweise in den Raum zwischen den Schenkeln 11 und 12 hinein, bevor er dann durch das Einsetzen des Plastikteils 2 nach außen gedrückt wird.

Die Zunge 19B weist im Gegensatz zur Zunge 19A nur zwei Abschnitte auf, und zwar einen ersten, mit dem Schenkel 12 verbundenen und nach außen abgewinkelten Abschnitt 194 und einen sich an den Abschnitt 194 anschließenden und nach innen abgewinkelten zweiten Abschnitt 195. Dabei ist der Abschnitt 195 so abgewinkelt, daßer sich in etwa rechtwinklig zum Schenkel 12 erstreckt, wenn das Plastikteil 2 in die Metallklammer 1 eingesetzt ist.

Der Schenkel 12 der Metallklammer 1 weist ferner zwei in den zwischen den beiden Schenkeln 11 und 12 ausgebildeten Raum gerichtete, durch Ausstanzen und Abwinkeln erhaltene Zungen 19C auf. Die beiden Zungen 19C weisen einen mit dem Schenkel 12 verbundenen, nach innen abgewinkelten Abschnitt 196 und einen sich daran anschließenden, ein freies Ende der Zunge 19C bildenden Abschnitt 197 auf, der sich in etwa parallel zum Schenkel 12 und im Raum zwischen den beiden Schenkeln 11 und 12 in Richtung auf den die beiden Schenkel verbindenden Abschnitt 13 erstreckt.

Der die beiden Schenkel 11 und 12 verbindende, in etwa U-förmige Abschnitt 13 weist eine Öffnung 131 auf, die zu den Formelementen des Befestigungselements zählt und die zur Aufnahme eines entsprechenden Formelements des Plastikteils 2 bestimmt ist.

Das Plastikteil 2 ist hinsichtlich seiner Form und seiner Abmessungen an die Metallklammer 1 angepaßt. Es ist daher, von der Seite gesehene, in etwa V-förmig ausgebildet und weist einen im wesentlichen rechteckigen Schenkel 21, einen zweiteiligen Schenkel 22 und einen die Schenkel 21, 22 verbindenden, im wesentlichen U-förmigen Abschnitt 23 auf. Der Schenkel 21 ist an seinem freien Ende mit einer Wulst 24 versehen, die so ausgebildet ist, daß der als Federarm 21 des Plastikteils 2 wirkende Schenkel 21 den Federarm 11 der Metallklammer 1 wenigstens in einem Endbereich 14 beidseitig umgibt und dem freien Ende F des Federarms 11, 21 des Befestigungselements A in einem Endbereich 14, 24 eine auf die Funktion des freien Endes F abgestimmte besondere Form gibt. Die Wulst 24 weist auf der vom Schenkel 22 des Plastikteils 2 abgewandten Seite des Schenkels 21 eine gewölbte Arbeitsfläche 241 auf, die dazu bestimmt ist, mit einer Aufnahmeöffnung der zu befestigenden Baugruppe B zusammenzuwirken.

Der Schenkel 22 des Plastikteils 2 ist in seiner Form und in seinen Abmessungen an die Form und die Abmessungen des Schenkels 12 der Metallklammer 1 angepaßt. Er weist aus diesem Grunde einen sich vom freien Ende des Schenkels 22 in Richtung auf den Verbindungsabschnitt 23 erstreckenden Abschnitt 221 auf, dessen Breite derjenigen des Schenkels 12 der Metallklammer 1 entspricht. An diesen Abschnitt 221 schließt sich ein schmaler, sich bis zum Verbindungsabschnitt 23 erstreckender Abschnitt 222 an. Der Abschnitt 221 ist kissenförmig mit einer vom freien Ende des Schenkels 22 nach innen gerichteten Anschrägung 223 versehen, an die sich ein in Richtung auf den Verbindungsabschnitt 23 abfallender Abschnitt 224 anschließt.

Das Plastikteil 2 weist einige Formelemente auf, die so gestaltet und bemessen sind, daß sie mit den entsprechenden Formelementen der Metallklammer 1 zusammenwirken. Das erste dieser Formteile ist eine sich auf dem Schenkel 21, und zwar auf der vom Schenkel 22 abgewandten Seite, mittig vom freien Ende 24 des Schenkels 21 in Richtung auf den Verbindungsabschnitt 23 erstreckende Rippe 25, die so geformt und bemessen ist, daß sie beim Zusammenfügen des Plastikteils 2 mit der Metallklammer 1 in die Auskerbung 16 der Metallklammer 1 formschlüssig eingreift.

Ein weiteres Formelement des Plastikteils 2 ist eine ebenfalls mittig verlaufende, an der Außenseite des Verbindungsabschnitts 23 angeordnete Nase 26, die so geformt und bemessen ist, daß sie beim Zusammensetzen des Plastikteils 2 mit der Metallklammer 1 formschlüssig in die Aussparung 131 der Metallklammer 1 eingreift und sich durch diese nach außen erstreckt.

Ferner weist das Plastikteil 2 zwei Formelemente in Form von zwei an den Längskanten des Abschnitts 224 des Schenkels 22 angeordnete Nasen 27 auf. Diese beiden seitlichen Nasen 27 erstrecken sich auf der vom Schenkel 21 abgewandten Seite des Schenkelabschnitts 224 und sind so bemessen und angeordnet, daß sie in die seitlichen Ausschnitte 17, 18 der Metallklammer 1 formschlüssig eingreifen.

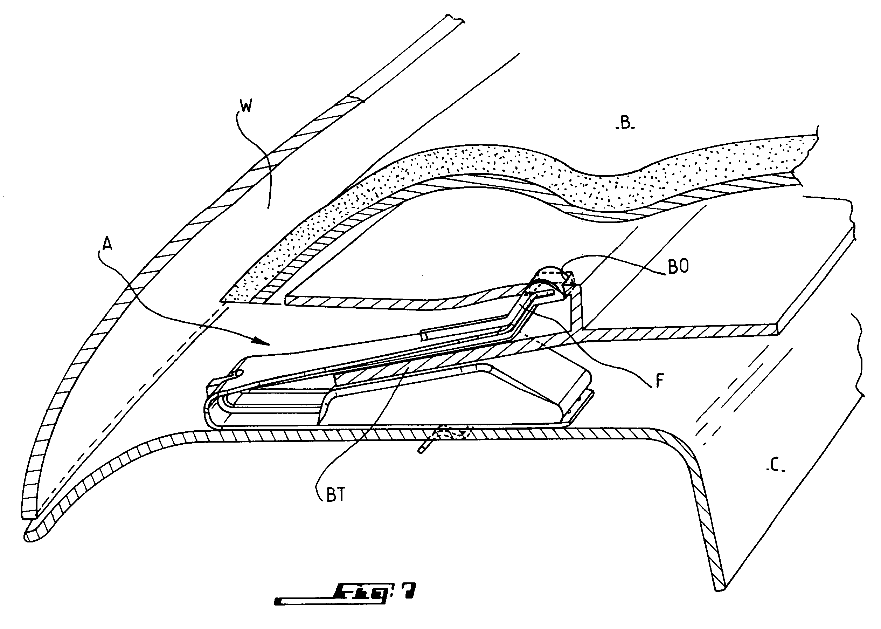

Wie aus den Figuren 2 und 6 zu entnehmen ist, weist das Plastikteil 2 außerdem auf der der Metallklammer 1 zugewandten Seite zum einen im Abschnitt 222 eine Nase 28 auf, die so bemessen und ausgebildet ist, daß sie beim Zusammensetzen des Plastikteils 2 mit der Metallklammer 1 formschlüssig in eine Aussparung 198 der Metallklammer 1 eingreift. Und zum anderen weist das Plastikteil 2 im Abschnitt 221 eine Vertiefung 225 auf, die so angeordnet und bemessen ist, daß die Zunge 19B mit ihrem zweiten Abschnitt 195 federnd in die Vertiefung 225 eintauchen kann.

Figur 7 zeigt ein erfindungsgemäßes Befestigungselement A in einer Einbauposition. Ein Karosserieelement C erstreckt sich in etwa horizontal von einer Windschutzscheibe W aus ins Innere des Kraftfahrzeugs. Auf diesem Karosserieelement C ist das Befestigungselement A mittels dreier Zungen 19A und einer Zunge 19B in vier dafür vorgesehenen und entsprechend geformten Öffnungen des Karosserieelements C verankert.

Beim Einsetzen des Befestigungselements A werden zunächst die drei Zungen 19A mit ihren Endabschnitten 193 gleichzeitig in die drei dafür vorgesehenen Öffnungen eingeführt. Dann wird das Befestigungselement A mit dem Verbindungsabschnitt 13 der Metallklammer 1 voraus soweit nach vorne geschoben, bis die Zunge 19B mit ihrem Abschnitt 194 in die dafür vorgesehene und entsprechend geformte Öffnung des Karosserieelements C eintaucht. Während des Einsetzens des Befestigungselements A schieben sich die Zungen 19A unter das Blech des Karosserieelements C, und folglich gelangen entsprechende Abschnitte des Karosserieblechs zwischen den Schenkel 12 des Befestigungselements A und die Zungen 19A und der Schenkel 12 liegt damit direkt auf dem Blech des Karosserieelements C auf.

Um die durch die erfindungsgemäße Ausgestaltung des Befestigungselements A erzielte Verringerung oder sogar Unterdrückung von Quietschgeräuschen im Fahrbetrieb weiter zu verbessern, können die Nasen 27 und 28 des Plastikteils 2 gemäß einer Ausführungsvariante der Erfindung so bemessen sein, daß sie bei in die Metallklammer 1 eingesetztem Plastikteil 2 über den Schenkel 12 überstehen. Die Höhe der Nasen 27 und 28 muß also größer sein als die Materialstärke des Schenkels 12. Sollte der Schenkel 12 auch noch nach außen gerichtete Profilrippen oder andere nach außen gerichtete Wölbungen aufweisen, so ist die Höhe der Nasen 27 und 28 entsprechend zu vergrößern. Eine derartige Ausgestaltung des Befestigungselements A bewirkt, daß die Metallklammer 1 nicht mehr vollständig auf dem Karosserieblech aufliegt, sondern daß die Auflagefläche der Metallklammer 1 auf jene der Zungen 19A und 19B begrenzt ist.

Wenn mehrere Verbindungselemente A im Karosserieelement C verankert sind, wird die Baugruppe B, hier zum Beispiel ein Instrumentenbrett eines Kraftfahrzeugs, mit einem dafür ausgebildeten Teil BT in die Verbindungselemente A, und zwar zwischen die beiden Schenkel 11, 21 und 12, 22, eingeschoben. Dabei greift der Federarm 11, 21 mit seinem freien Ende F in eine in der Baugruppe dafür ausgebildeten Öffnung BO ein und arretiert so die Baugruppe. Zum vollständigen Befestigen der Baugruppe B am Karosserieelement C werden die Befestigungselemente A durch zwei in der Zeichnung nicht dargestellte Schrauben ergänzt, die vorzugsweise in den beiden Endbereichen der Baugruppe B eingebracht werden. Damit ist die Baugruppe B dann an der Karosserie durch zwei Schraubverbindungen fest und durch mehrere erfindungsgemäße Befestigungselemente A begrenzt beweglich befestigt. Diese erfindungsgemäße Anordnung von Befestigungselementen gewährleistet gleichermaßen eine feste, den zu erwartenden Belastungen des Kraftfahrzeugs entsprechende Befestigung und eine flexible, die beim Fahrbetrieb des Kraftfahrzeugs auftretende Verwindung aufnehmende, geräuscharme oder sogar geräuschfreie Befestigung.

## Patentansprüche

1. Befestigungselement zum Befestigen einer Baugruppe (B), zum Beispiel einer Instrumententafel, an der Karosserie (C) eines Kraftfahrzeugs, wobei das Befestigungselement (A) eine in der Karosserie (C) zu verankernde Metallklammer (1) aufweist, die so ausgebildet ist, daß sie ein entsprechend geformtes Teil (BT) der Baugruppe (B) verankernd aufnehmen kann,
**dadurch gekennzeichnet, daß** es ferner ein auf die Metallklammer (1) aufsteckbares und einen die Baugruppe (B) aufnehmenden Teil der Metallklammer (1) wenigstens teilweise auskleidendes Plastikteil (2) aufweist.

2. Befestigungselement nach Anspruch 1,
**dadurch gekennzeichnet, daß** die Metallklammer (1) und das Plastikteil (2) jeweils miteinander zusammenwirkende Formelemente (17, 27) aufweisen, dank derer das Plastikteil (2) wenigstens bei in das Befestigungselement (A) eingeschobener Baugruppe (B) mit der Metallklammer (1) unverschiebbar verbunden ist.

3. Befestigungselement nach Anspruch 1 oder 2,
**dadurch gekennzeichnet, daß** das Plastikteil (2) bei einer Rauhtiefe von 2 µm und einer Gleitgeschwindigkeit von 5 mm/s eine dynamische Reibungszahl in der Größenordnung von 0,05 bis 0,15 aufweist.

4. Befestigungselement nach einem der Ansprüche 1 bis 3,
**dadurch gekennzeichnet, daß** die Metallklammer (1) und das Plastikteil (2) je einen als Federarm wirkenden Teil (11, 21) aufweisen, wobei der Federarm (11) der Metallklammer (1) und der Federarm (21) des Plastikteils (2) gemeinsam einen Federarm des Befestigungselements (A) mit einem zum Eingreifen in eine dafür vorgesehene Aufnahmeöffnung (BO) der Baugruppe (B) bestimmten freien Ende (F) bilden.

5. Befestigungselement nach Anspruch 4,
**dadurch gekennzeichnet, daß** das freie Ende (F) des Federarms (11, 21) des Befestigungselements (A) so angeschrägt ist, daß es (F) unter Einwirkung einer vorbestimmten Kraft zum Herausziehen der Baugruppe (B) aus dem Befestigungselement (A) aus der Aufnahmeöffnung (FO) herausgleitet und so die Baugruppe (B) freigibt, daß das Befestigungselement (A) dabei aber in der Karosserie (C) verankert bleibt.

6. Befestigungselement nach Anspruch 4 oder 5,
**dadurch gekennzeichnet, daß** der Federarm (21) des Plastikteils (2) den Federarm (11) der Metallklammer (1) wenigstens in einem Endbereich (14, 24) des freien Endes (F) des Federarms (11, 21) des Befestigungselements (A) umgibt.

7. Befestigungselement nach Anspruch 1,
**dadurch gekennzeichnet, daß** die Metallklammer (1) mit einer hohen Vorspannung gefertigt ist, die so gewählt ist, daß die das Bauelement aufnehmende Öffnung nach Einsetzen des Plastikteils (2) in die Metallklammer (1) in etwa gleich groß ist.

8. Anordnung von Befestigungselementen (A) zum Befestigen einer Baugruppe (B), zum Beispiel einer Instrumententafel, an der Karosserie (C) eines Kraftfahrzeugs,
**dadurch gekennzeichnet, daß** sie wenigstens ein Befestigungselement (A) nach einem der Ansprüche 1 bis 7 sowie höchstens zwei Schraubverbindungen aufweist.

9. Anordnung nach Anspruch 8,
**dadurch gekennzeichnet, daß** sie zwei Schraubverbindungen aufweist, von denen je eine an einem von zwei voneinander abgewandten Endbereichen der Baugruppe (B) angeordnet ist.
